## Europäisches Patentamt

## European Patent Office

## Office européen des brevets

(11) Veröffentlichungsnummer: **0 099 852**
**B1**

(12) **EUROPÄISCHE PATENTSCHRIFT**

(45) Veröffentlichungstag der Patentschrift:
14.06.89

(21) Anmeldenummer: 83730071.4

(22) Anmeldetag: 12.07.83

(51) Int. Cl.⁴: **G 01 T 1/11**

(54) Verfahren zur Herstellung eines Dünnschicht-Detektors für ein integrierendes Festkörperdosimeter.

(30) Priorität: 12.07.82 DE 3226378

(43) Veröffentlichungstag der Anmeldung:
01.02.84 Patentblatt 84/5

(45) Bekanntmachung des Hinweises auf die Patenterteilung:
14.06.89 Patentblatt 89/24

(84) Benannte Vertragsstaaten:
AT CH DE FR GB IT LI NL SE

(56) Entgegenhaltungen:
DE-A- 2 147 057
US-A- 3 141 973

NUCLEAR INSTRUMENTS AND METHODS, Band 175, Nr. 1, 1. September 1980, Seiten 173-175, North-Holland Publishing Company, Amsterdam, NL; G. UCHRIN: "A new type of extremity dosimeter"
PHYSICS IN MEDICINE AND BIOLOGY, Band 21, Nr. 6, November 1976, Seiten 955-964, London, GB; S.K. MEHTA et al.: "Gamma dosimetry with Al2O3 thermoluminescent phosphor"
NUCLEAR INSTRUMENTS AND METHODS, Band 175, Nr. 1, 1. September 1980, Seiten 107-108, North-Holland Publishing Company, Amsterdam, NL; G. HOLZAPFEL et al.: "Comparative TL-TSEE measurements on flame-sintered LiF TLD materials"

(73) Patentinhaber: Holzapfel, Georg, Dr., Marinesteig 5,
D-1000 Berlin 38 (DE)

(72) Erfinder: Holzapfel, Georg, Dr. rer. nat., Marinesteig 5,
D-1000 Berlin 38 (DE)
Erfinder: Lesz, Jan, Dr. rer. nat., Deisterstrasse 32,
D-3300 Braunschweig (DE)

(74) Vertreter: Christiansen, Henning, Dipl.-Ing.,
Patentanwalt CHRISTIANSEN Pacelliallee 43/45,
D-1000 Berlin 33 (DE)

(56) Entgegenhaltungen: (Fortsetzung)
HEALTH PHYSICS, Band 13, Nr. 6, Juni 1967, Seiten 567-573, Pergamon Press, Northern Ireland; W.J. HARTIN: "An improved thermoluminescence dosimetry system"
PROCEEDINGS OF THE FIFTH INTERNATIONAL CONFERENCE ON LUMINESCENCE DOSIMETRY, 14.-17.- Februar 1977, Seiten 313-323, Sao Paulo, Brasilien, Physikalisches Institut Justus-Liebig-Universität, Giessen, DE; M.W. CHARLES: "The development of a practical 5 mg cm-2 skin dosimeter"

## Beschreibung

Die Erfindung betrifft ein Verfahren zur Herstellung eines Dünnschicht-Detektors der im Oberbegriff des Anspruchs 1 angegebenen Art sowie einen nach diesem Verfahren hergestellten Detektor.

In integrierenden Festkörper-Dosimetern werden Elektronen, die während einer ionisierenden Bestrahlung freigesetzt wurden, in atomaren Haftstellen des Detektormaterials eingefangen und gespeichert. Ihre Ablösung kann beispielsweise durch Erwärmung des Detektors im Auswertevorgang stimuliert werden; sie wird von einer Photonenemission, bekannt als Thermolumineszenz (TL), und zuweilen von einer Elektronenemission, bekannt als thermisch stimulierte Exoelektronenemission (TSEE), begleitet. Die Gesamtzahl der emittierten Teilchen gibt ein Maß für die vorher empfangene Strahlendosis. Neben einigen Sulfaten und Oxiden werden bestimmte Salze wie Lithiumfluorid (LiF), dotiert mit Aktivatoren wie Magnesium (Mg) und Titan (Ti), für die Thermolumineszenzdosimetrie (TLD) als hauptsächliche Anwendung des Gegenstands dieser Erfindung verwendet. Im allgemeinen geht die TLD-Detektor-Herstellung von Pulvern dieser Substanzen aus.

Bei bekannten derartigen Verfahren wird das TL-Pulver zum Teil lose verwendet; während der Bestrahlung wird es dabei von einer Kapsel umschlossen und für die Auswertung in einem Näpfchen ausgebreitet. Vorzugsweise wird das Pulver jedoch zu festen Detektoren verarbeitet.

Dabei wird die Handhabung vereinfacht, indem man das Pulver dauerhaft in einer Kunststoff-Matrix wie Teflon (PTFE) einbettet. Da das Pulver höchstens 30% des Detektorvolumens einnehmen kann, ist das Strahlungs-Ansprechvermögen jedoch beträchtlich vermindert. Zudem erfordert die Erzeugung des thermischen Kontakts besondere Sorgfalt, weil das Teflon-Scheibchen sich auf der Heizplatte wölben kann.

Darüberhinaus darf die Temperatur einen Wert von 300 °C nicht übersteigen, um den Detektor nicht unbrauchbar zu machen. Die Regenerierung bestrahlter Detektoren erfordert hingegen eine Nachtemperung bei bis zu 400 °C. Weitere Probleme der Detektoren auf Teflonbasis betreffen die Aufrechterhaltung der optischen Transparenz und die Vermeidung elektrostatischer Staubanziehung.

Häufiger werden bei den bekannten Verfahren feste TLD-Detektoren durch Verdichtung des Pulvers bei hohem Druck in einem Kessel und Verarbeitung des fliessenden Materials durch Strangpressen über eine Formdüse hergestellt. Chips mit geeigneten Abmessungen werden vom Strangpreßkörper abgetrennt und poliert und bilden selbsttragende Detektoren. Wegen ihrer Zerbrechlichkeit beträgt die Dicke mindestens 0,5 mm, besser jedoch 1 mm.

Bei einer anderen bekannten Methode der Dosimeterherstellung wird das getrocknete Pulver auf eine selbstklebende, hitzebeständige Kunststoff-Folie (Kapton) gestreut; Empfindlichkeit und Stabilität der Dosisanzeige erwiesen sich als ziemlich niedrig.

Aus Suspensionen des Pulvers in bestimmten Flüssigkeiten können glatte Sedimentschichten grundsätzlich auf beliebigen Substraten gebildet werden. Der Niederschlag der Schicht kann auch durch Filtrierung erzwungen werden, d.h. dadurch, daß die Flüssigkeit durch das Substrat gesaugt wird, welches durchgehend porös sein muß, um als Filterkörper zu wirken. Um das Anhaften des filtrierten Pulvers zu verbessern, wird ein anschließender Preßvorgang bei Raumtemperatur empfohlen. Diese Methode vermeidet im Prinzip hohe Temperaturen, um die Materialeigenschaften nicht zu verschlechtern; sie wurde speziell für die Herstellung von TSEE-Detektoren entwickelt. Nur wenn eine zusätzliche Sinterung der Pulverkörner in der niedergeschlagenen Schicht beabsichtigt ist, wird eine anschließende Temperung durchgeführt.

Eine bekannte spezifische heiße Herstellungsmethode bildet dagegen das Flammspritzen von Pulvern, welches die Partikel miteinander und mit einem geeigneten Substrat verschweißt. Es zeigte sich jedoch, daß Flammentemperatur und -zusammensetzung sehr kritische Parameter für die Niederschlagung wirksamer TL-Detektorschichten sind, so daß auf diese Weise keine befriedigenden Ergebnisse erzielt werden konnten.

Angesichts der vorhandenen, verschiedenartigen Lösungsvorschläge besteht die Aufgabe, ein Festkörperdosimeter mit einer dünnen Detektorschicht zu konstruieren, dessen TL-Ansprechvermögen gegen Strahlung durch den Verarbeitungsprozeß nicht beeinträchtigt wird und welches mit einem hitzebeständigen Substrat auch bei Temperaturen bis zu 400 °C dauerhaft verbunden ist.

Die Lösung dieser Aufgabe wurde erfindungsgemäß auf der Grundlage des in Anspruch 1 angegebenen Verfahrens gefunden. Auf eine Schicht des Pulvers wirken gleichzeitig ein hoher Druck und eine hohe Temperatur bei bestimmten Werten ein, vorzugsweise in einer Presse mit heizbarem Stempel und heizbarem Support, so daß durch plastisches Fließen der Pulverkörner eine chemisch-mechanische Verschweißung der Schicht mit einem geeignet präparierten Schichtträger (Substrat) eintritt.

Die Erfindung beruht auf der Erkenntnis, daß unter derartigen Bedingungen ein Arbeitsbereich auffindbar ist, der ein ausreichendes Thermolumineszens-Ansprechvermögen aufweist, obgleich im allgemeinen zu höheren Drücken hin ein Abfall des Ansprechvermögens eintritt. Bei einer bevorzugten Ausführung der Erfindung ist dabei der Arbeitspunkt im Bereich eines relativen Maximums des Thermolumineszens-Ansprechvermögens gelegen.

Unter den bekannten Detektormaterialien der Festkörperdosimetrie sind Salze wie Lithiumfluorid (LiF), Lithiumborat ($Li_2B_4O_7$) und Kalziumfluorid ($CaF_2$) wegen ihrer relativ leichten plastischen Verformbarkeit besonders für eine Verarbeitung gemäß dieser Erfindung geeignet.

Vorteilhaft bei der Erfindung ist, daß insbesondere für Grenzflächen- oder Hautdosimetrie, die Konzentration des Detektormaterials in einer dünnen Schicht erzielt wird. Hierfür wurden geeignete Schichtträger (Substrate) gefunden.

Um Gewebeäquivalenz des Dosimeters zu erzielen, werden bevorzugt Materialien mit kleiner effektiver Ordnungszahl Z verwendet.

Die Wahl eines Substrats mit niedrigem Z-Wert für die Verarbeitung gemäß dieser Erfindung kann zwischen den Elementen Beryllium (Be), Bor (B), Magnesium (Mg), Aluminium (Al), Silizium (Si) einschließlich ihrer Legierungen und Verbindungen wie Berylliumoxid (BeO), Magnesiumoxid (MgO), Aluminiumoxid ($Al_2O_3$) einschließlich Mischungen dieser Keramiken getroffen werden, wobei die Oberfläche des Substrats durch Ätzen und/oder Sandstrahlen präpariert werden kann. Es ist bereits bekannt, einige dieser Substrate als Träger für flammgespritzte Detektorschichten zu benutzen.

In einer anderen Ausführung der Erfindung wird die Substratoberfläche durch Bedeckung mit einer Flammspritzschicht präpariert; diese besteht z.B. aus Bor (B), Magnesium (Mg), Aluminium (Al), Silizium (Si) oder ihren Legierungen bzw. aus Magnesiumoxid (MgO), Aluminiumoxid ($Al_2O_3$) oder deren Mischungen und wirkt als Bindeschicht zwischen dem Substrat und der heißgepreßten Detektorschicht.

Eine solche Anordnung eignet sich auch für Graphit (C)-Substrate, die mit einer heißgepreßten Detektorschicht gemäß dieser Erfindung bedeckt werden sollen. Flammgespritzte Bindeschichten aus Aluminium zur Befestigung flammgespritzter Detektorschichten sind bereits bekannt.

Die TL-Ausbeute wird beträchtlich erhöht, wenn das im Detektorvolumen während der Auswertung erzeugte Licht an der Grenzfläche zwischen Detektorschicht und Substrat, bzw. Bindeschicht, reflektiert werden kann; dies ist der Fall für Metalle, z.B. für Beryllium, Aluminium oder deren Legierungen.

In einer weiteren Ausführung dieser Erfindung werden nichtreflektierende Substrate oder Bindeschichten, insbesondere aus Bor (B) oder Silizium (Si) mit einer Reflexionsschicht aus Beryllium (Be), Magnesium (Mg), Aluminium (Al) oder ihren Legierungen, Magnesiumoxid (MgO), Aluminiumoxid ($Al_2O_3$) oder deren Mischungen bedeckt.

Gemäß einer anderen vorteilhaften Weiterbildung der Erfindung wird die Reflexionsschicht durch Flammspritzen hergestellt. Zum Beispiel bilden eine Bor (B)-Bindeschicht zusammen mit einer $Al_2O_3$-Reflexionsschicht, beide flammgespritzt, eine Doppelschichtstruktur zwischen dem Substrat, z.B. aus Graphit (C) und der Detektorschicht, z.B. Lithiumfluorid (LiF), d.h. eine C/B/$Al_2O_3$/LiF-Konfiguration.

Als Teil des Dosimeters können die Detektoren verschieden gestaltet werden.

Vorteilhafte Weiterbildungen der Erfindung sind in den Unteransprüchen gekennzeichnet bzw. werden bei der nachstehenden Darstellung von bevorzugten Ausführungen der Erfindung näher beschrieben. Es zeigen:

Figuren 1a bis 1c verschiedene Ausführungsbeispiele des erfindungsgemäßen Schichtträgers in Seitenansicht,

Figuren 2a und 2b Diagramme des Verlaufs des Photostroms als Glow-Kurve für zwei verschiedene Ausführungsbeispiele der Erfindung,

Figur 3 ein dreidimensionales Diagramm der Ausbeute, d.h. das TL/Strahlungs-Ansprechvermögen der heißgepreßten LiF-Schicht, in Abhängigkeit von Druck und Temperatur,

Figur 4a zeigt als rasterelektronenmikroskopische Darstellung ein sandgestrahltes Al-Substrat,

Figur 4b ein unbehandeltes Graphit-Substrat,

Figur 4c eine flammgespritzte Bor-Bindeschicht auf Graphit,

Figur 4d eine flammgespritzte $Al_2O_3$-Reflexionsschicht,

Figur 4e eine durch Heißpressen verschweißte LiF-TLD-Detektorschicht,

Figur 4f die ursprünglichen LiF-Pulverkörner,

Figur 5 ein Ausführungsbeispiel einer Vorrichtung zur Durchführung des erfindungsgemäßen Verfahrens,

Figur 6 eine Variante der Vorrichtung gemäß Figur 5 mit Mitteln zum Trennen der einzelnen Dosimeterelemente,

Figur 7 eine weitere Vorrichtung zur Durchführung des erfindungsgemäßen Verfahrens, welche Walzen aufweist, und

Figur 8 ein Ausführungsbeispiel eines nach dem erfindungsgemäßen Verfahren hergestellten Dosimeters, welches Codierungen zur individualisierenden Kennzeichnung aufweist.

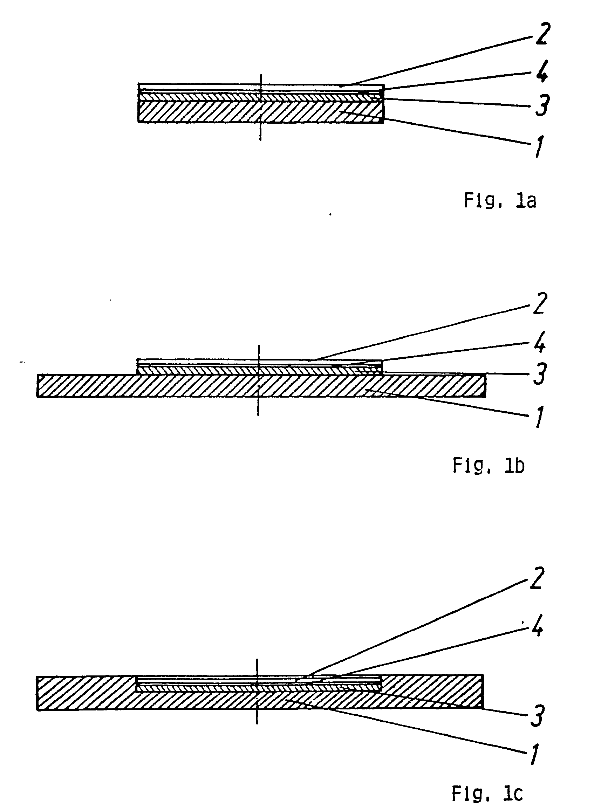

Bei einer in Fig. 1a dargestellten Ausführung der Erfindung wird die Detektorschicht 2 derart auf ein geeignet präpariertes Substrat 1 aufgepreßt, daß sie dessen gesamte Oberfläche bedeckt.

In einer in Fig. 1b wiedergegebenen anderen Ausführung der Erfindung wird die Detektorschicht 2 derart auf ein geeignet präpariertes Substrat 1 aufgepreßt, daß sie dessen Oberfläche nur teilweise bedeckt.

In Fig. 1c ist eine weitere Ausführung der Erfindung dargestellt, bei der die Detektorschicht 2 in eine Vertiefung des Substrats 1 gepreßt wird. Hierdurch wird ein verbesserter Schutz gegen mechanische Beschädigung erzielt.

Auf die Erzeugung von in den Figuren 1a bis 1c Substrat 1 und Detektorschicht 2 vorgesehene Bindeschicht 3 und die Reflexionsschicht 4 wird weiter unten näher eingegangen.

Wenn eine dauerhafte Identifizierung des Detektors, bzw. des Dosimeters, erwünscht ist, wird der unbedeckte Teil des Substrats mit einer Code-Struktur, z.B. mit einer Anordnung von Löchern versehen, z.B. nach Art einer Lochkarte.

Zwecks Herstellung einer ganzen Detektorcharge durch nur einen Heißpreßvorgang wird erfindungsgemäß eine große Substratplatte verwendet, welche anschließend zerteilt wird, z.B. durch Abschneiden oder Absägen der einzelnen Detektoren.

Die Dicke der verschiedenen Schichten kann entsprechend der Korngröße des dem Flammspritzen bzw. Heißpressen unterworfenen Materials variiert werden. Günstige Bedingungen wurden mit der Kombination folgender Materialstärken gefunden: 100 µm für die Bindeschicht 3, 50 µm für die Reflexionsschicht 4 und 100 bis 200 µm für die TL-empfindliche Schicht 2. Die genannten Werte stellen Mittelwerte dar, weil die beispielsweise beim Flammspritzen hergestellten Oberflächen relativ rauh sind. Die Dauer des Heißpreßvorgangs selbst beträgt in der Regel nur wenige Sekunden.

In einer vorteilhaften Weiterbildung der Erfindung ist die große Substratplatte mit einem Kerbmuster versehen, so daß alle Detektoren einer Charge gleichzeitig, etwa durch einen kurzen Überdruck (Schock), herausgebrochen werden können.

In einer weiteren Ausführung der Erfindung sind die Preßwerkzeuge mit einem entsprechenden Kerb- und/oder Schneidenmuster zum Herausbrechen der Detektorcharge versehen.

Der Heißpreßvorgang zur Herstellung der Dünnschichtdetektoren gemäß der Erfindung erfolgt vorzugsweise in einer Presse mit Stempel und Preßunterlage als Preßwerkzeuge. Die Erfindung ist jedoch nicht hierauf beschränkt. Vielmehr erfolgt der Heißpreßvorgang erfindungsgemäß auch vorteilhaft durch Walzen, wobei eine oder mehrere beheizte und belastete Walzen die Preßwerkzeuge darstellen.

Das Prinzip und die Verwirklichung der Erfindung soll an zwei Beispielen erläutert werden. Die Detektoren bilden runde Scheibchen (17 mm $\varnothing$, 1 mm dick) mit einer zentrischen Vertiefung (10 mm $\varnothing$, 0,5 mm tief) zur Aufnahme der dünnen Schichten. Das Detektormaterial besteht aus kommerziellem Lithiumfluorid dotiert mit Magnesium und Titan (LiF:Mg,Ti). Das Heißpressen erfolgt bei einem Arbeitspunkt von 75 MPa und 400 °C. Es zeigt sich, daß die charakteristische Lumineszenz dieses Materials, insbesondere seine Glowkurve (TL-Photostrom in Abhängigkeit von der linear ansteigenden Temperatur im Auswertegerät) durch das erfindungsgemäße Heißpressen des Pulvers in eine dünne Schicht nicht wesentlich verändert wird.

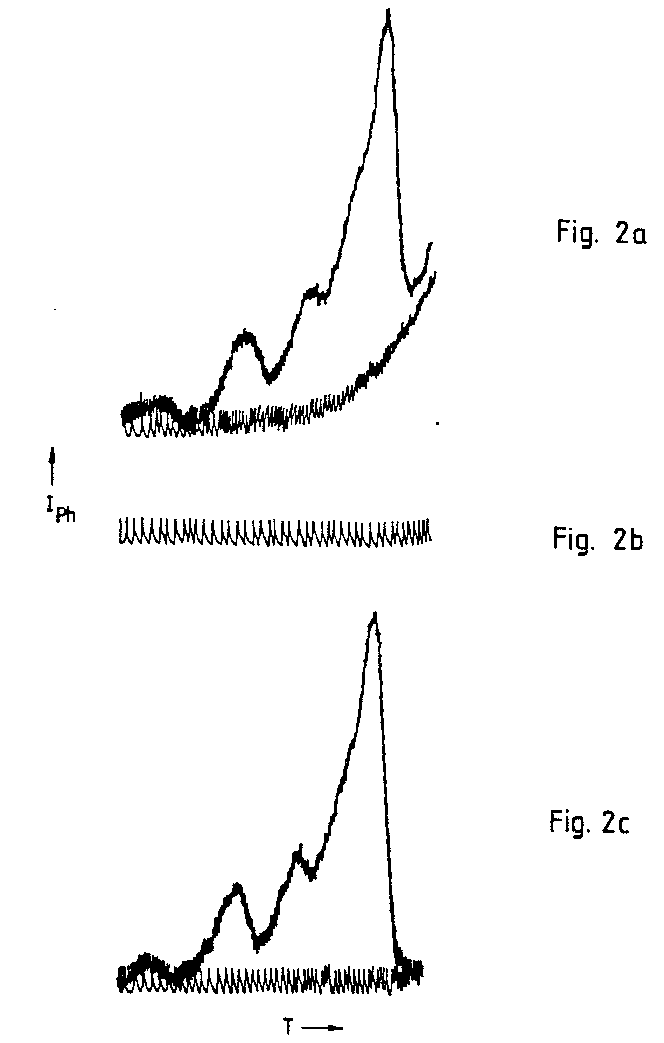

Das erste, in Fig. 2a wiedergegebene, Beispiel zeigt den Verlauf einer Glowkurve (obere Kurve: Verlauf des Photostroms in Abhängigkeit von der Temperatur), die an der einfachsten Detektorkonfiguration, einem sandgestrahlten Aluminiumsubstrat, erhalten wurde, welches ohne zusätzliche Hilfsmittel die Lithiumfluorid-Detektorschicht trägt (Al/LiF-Detektor). Das Ansprechen gegen Strahlung (0,012 · cGy γ-Strahlung) ebenso wie die Glowkurve sind für diesen Detektor und das ursprüngliche, in einem Näpfchen ausgebreitete Pulver gleicher Masse (24 mg) praktisch identisch. Jedoch wird im Bereich kleiner Dosiswerte eine Begrenzung sichtbar, da Licht, das wahrscheinlich von der Grenzfläche Al/LiF emittiert wird, den strahlungsunabhängigen Untergrund dieses Detektors mit zunehmender Auswertetemperatur steil anhebt. Die in Fig. 2a wiedergegebene untere Kurve gibt das den «Untergrund» des Detektors (einschließlich Auswertegerät) bildenden Signal wieder. Fig. 2b zeigt zum Vergleich das als «Untergrund des Auswertegeräts» in den Figuren 2a und c enthaltene Störsignal.

Das zweite, in Fig. 2c dargestellte, Beispiel zeigt den entsprechenden Verlauf einer Glowkurve, die an der am weitesten ausgestalteten Detektorkonfiguration gemäß der Erfindung erhalten wurde, einem Graphit-Substrat mit einer Bindeschicht aus Bor und einer Reflexionsschicht aus Aluminiumoxid (beide Schichten flammgespritzt) unter der heißgepreßten Lithiumfluorid-Detektorschicht (C/B/Al$_2$O$_3$/LiF-Detektor). Diese Ausführung erfüllt nahezu alle Anforderungen der Thermolumineszenz-Dosimetrie. Insbesondere ist der «Untergrund» (einschließlich Auswertegerät dieses Detektors so weit herabgesetzt, daß er den «Untergrund» von Heizelement und Photoelektronenvervielfacher des Auswertegerätes, siehe Fig. 2b, kaum übersteigt. Die Glowkurve des (LiF:Mg,Ti)-Materials (24 mg) ist kaum gestört (0,012 cGy γ-Strahlung), und es sind Messungen bis in den $10^{-3}$ cGy-Bereich möglich.

Zur grundsätzlichen Darstellung des erfindungsgemäßen Verfahrens soll die Bildung einer Detektorschicht mit optimalem TL/Strahlungs-Ansprechvermögen durch Heißpressen erläutert werden. Die Ergebnisse der Experimente beziehen sich auf einen C/B/Al$_2$O$_3$/LiF-Detektor (siehe auch Fig. 2c), sie sind beispielhaft auch für die anderen vorgenannten Detektor-Konfigurationen.

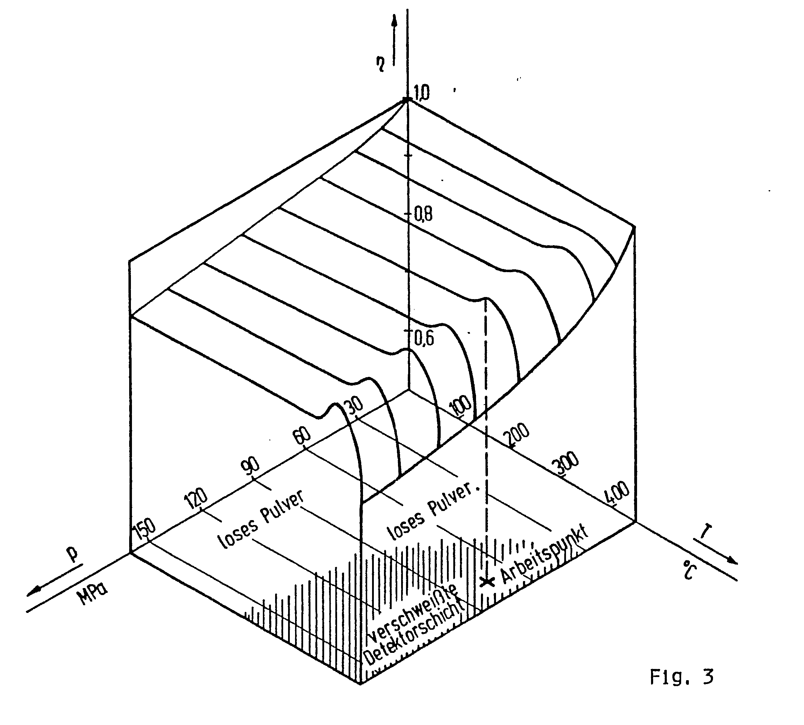

Fig. 3 zeigt die Ausbeute η, d. h. das TL-Strahlungs-Ansprechvermögen der heißgepreßten LiF-Schicht, normiert auf das Ansprechvermögen des unbehandelten Pulvers, über der Druck P/Temperatur T-Ebene. Die Druckanwendung bewirkt i. a. eine Herabsetzung der Ausbeute. Wenn jedoch die Preßtemperatur längs einer Isobaren erhöht wird, dann wird eine Erholung des TL-Materials (LiF) im Bereich um 400 °C beobachtet, gefolgt von einem steilen Abfall von η. Die durch die -Maxima gebildete Sattellinie liegt über der 400 °C-Isothermen. Die Detektorschicht wird mit dem Substrat erst oberhalb bestimmter (p/T)-Werte fest verschweißt, gekennzeichnet durch den schraffierten Bereich in Fig. 3. Den Arbeitspunkt wird man also in diesem Bereich mit einem hinreichend hohen Druck, in diesem Fall 75 MPa, bei einer Temperatur von 400 °C wählen.

Die Grenze des Übergangs von Pulver, das nach dem Heißpressen lose auf dem Substrat liegen bleibt, zu einer fest verschweißten Detektorschicht – und damit die Wahl des Arbeitspunktes – kann für andere Detektor-Konfigurationen dieser Erfindung an anderer Stelle liegen. Der Grund liegt in einem abweichenden Vermögen des Substrats bzw. der Bindeschicht bzw. der Reflexionsschicht, eine chemische Verbindung mit einem bestimmten Detektormaterial unter plastischer Verformung einzugehen. In gleicher Richtung kann sich eine unterschiedliche Rauhigkeit der Oberfläche auswirken, welche die Detektorschicht festklammert, und zwar nach plastischem Fließen des Materials in die Hohlräume zwischen mehr oder weniger schräg stehenden Ecken und Kanten (chemisch-mechanische Verschweißung).

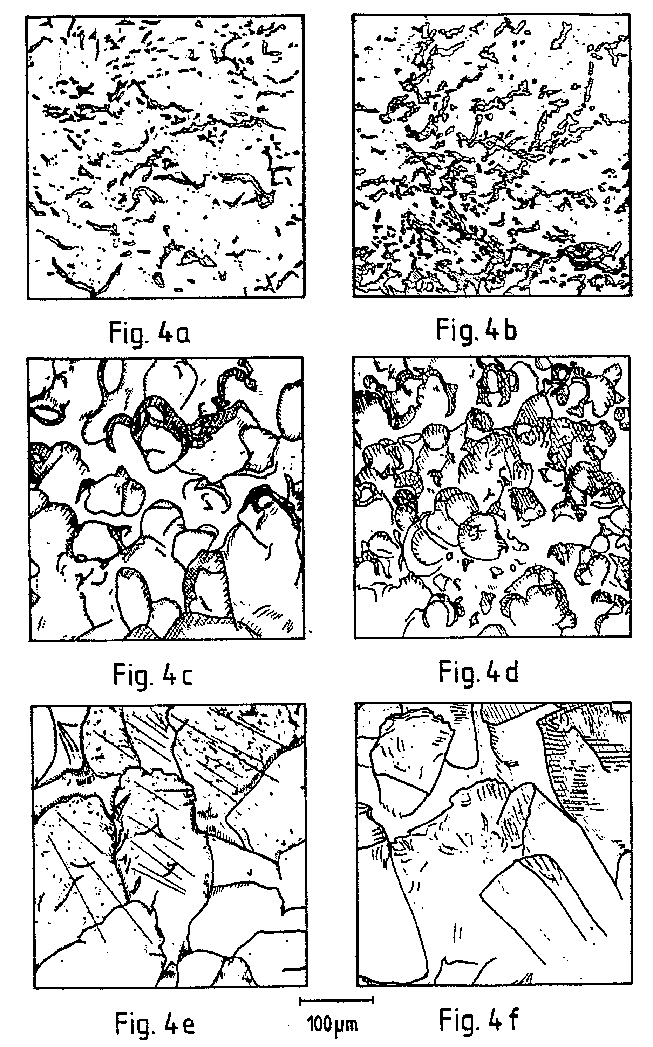

Einen unmittelbaren Eindruck der einzelnen Schritte gemäß der Erfindung vermitteln Aufnahmen mit einem Raster-Elektronenmikroskop, wie sie in den Figuren 4a bis f wiedergegeben sind. Dargestellt sind die folgenden Oberflächen. Im einzelnen zeigt Fig. 4a ein sandgestrahltes Al-Substrat, Fig. 4b ein unbehandeltes (nur Ultraschall-gereinigtes) Graphit-Substrat, Fig. 4c eine flammgespritzte Bor-Bindeschicht auf Graphit, Fig. 4d eine flammgespritzte $Al_2O_3$-Reflexionsschicht, Fig. 4e eine durch Heißpressen verschweißte LiF-TLD-Detektorschicht und Fig. 4f die ursprünglichen LiF-Pulverkörner.

Wie Fig. 4e zeigt, verschwinden die mit dem Substrat bzw. den Zwischenschichten und teilweise miteinander verschweißten LiF-Körner durch den Heißpreßvorgang nicht unbedingt vollständig. Bei diesem bevorzugten Ausführungsbeispiel eines durch das erfindungsgemäße Verfahren hergestellten Detektors bleiben die Korngrenzen als Linien und Furchen in der sonst glatten Oberfläche sichtbar.

Die Vorteile der Erfindung resultieren hauptsächlich aus einer erzeugten dünnen Detektorschicht und ihrer dauerhaften Verbindung mit einem wärmebeständigen Substrat niedriger Ordnungszahl. Im einzelnen ermöglicht dies eine gleichmäßigere Erwärmung des Detektorvolumens als Quelle des TL-Lichts, sowie einen zuverlässigen Wärmekontakt mit dem Heizsystem des Auswertegerätes. Damit werden schnelle Dosis-Auswertungen mit hoher Reproduzierbarkeit möglich; Standardabweichungen von 1% für eine Serie gleicher Bestrahlungs-/Auswertezyklen werden für den einzelnen Detektor leicht erreicht. Die Strahlungsempfindlichkeit des ursprünglichen TL-Pulvers bleibt für die heißgepreßten dünnen Detektorschichten gemäß dieser Erfindung erhalten, im Gegensatz zu den bekannten, stranggepreßten Detektor-Chips; bei einer Massenreduzierung auf 25%, verglichen mit Chips, wird nahezu die gleiche untere Dosis-Nachweisgrenze von $10^{-3}$ cGy erreicht. Darüberhinaus zeigen Dünnschicht-Detektoren nach dieser Erfindung ein gleichmäßigeres Ansprechvermögen gegen spektrale Veränderungen der Strahlung (flache Energieabhängigkeit). Von hoher praktischer Bedeutung für den Einsatz von TLDs im Strahlenschutz in großen Stückzahlen sind geringe Abweichungen des Ansprechvermögens sowohl innerhalb einer Detektorcharge als auch zwischen in gleicher Weise hergestellten Detektorchargen. Für Dünnschichtdetektoren nach dieser Erfindung werden Standardabweichungen unter 5% erhalten, womit eine individuelle Detektorkalibrierung vermieden wird, wie sie häufig bei den existierenden TLD-Systemen notwendig ist.

Das erfindungsgemäße Verfahren kann mittels verschiedener weiterer Vorrichtungen ausgeführt werden.

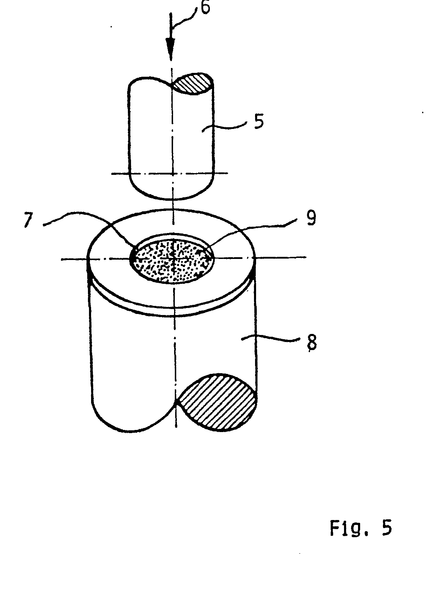

In Figur 5 ist ein Ausführungsbeispiel einer Anordnung zur Durchführung des Verfahrens wiedergegeben, bei der das Heißpressen mittels eines Kolbens 5 ausgeführt wird, der in Richtung eines Pfeiles 6 in eine Ausnehmung 7 gepreßt wird, welche innerhalb eines Supports 8 vorgesehen ist. Das Substrat 9 befindet sich innerhalb der Ausnehmung 7 und wird dem Vorgang des Heißpressens, d.h. einer gleichzeitigen Temperatur- und Druckeinwirkung – wie beschrieben – unterworfen.

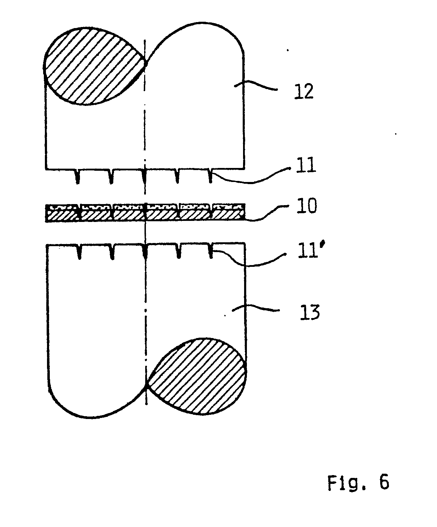

In Figur 6 ist eine Variante eines Ausführungsbeispiels der erfindungsgemäßen Vorrichtung dargestellt, bei der das Heißpressen für ein eine Vielzahl von einzelnen Detektorchips umfassendes Substrat 10 erfolgt.

Bei dem in Figur 6 dargestellten Ausführungsbeispiel wird ein ebenes Substrat verpreßt – entsprechend etwa dem Ausführungsbeispiel gemäß Figur 1a. Bei dem in Figur 6 wiedergegebenen Ausführungsbeispiel ist das Substrat 10 Träger einer größeren Anzahl von einzelnen Detektorchips, welche durch Kanten 11, die an dem Kolben 12 vorgesehen sind, zerteilt werden. An den Kanten 11 sind Vertiefungen 11' auf dem Träger (Support) 13 vorgesehen, in welche die Kanten 11 nach Durchtrennen des Substrats 10 hineingelangen können. Mit einer Anordnung gemäß Figur 6 kann – bei beheiztem Kolben 12 bzw. Support 13 – ein Heißpressen und Trennen der einzelnen Detektorelemente in einem Arbeitsgang erfolgen. Obgleich die Kanten 11 im dargestellten Ausführungsbeispiel lediglich in einer Richtung verlaufen, ist es für die praktische Anwendung einer Anordnung zweckmäßig, bei der das Trennen durch in zwei senkrecht zueinander verlaufenden Richtungen angeordnete Kanten 11 erfolgt, so daß sich ein Abtrennen einzelner Detektoren entsprechend den Stücken einer Schokoladentafel ergibt.

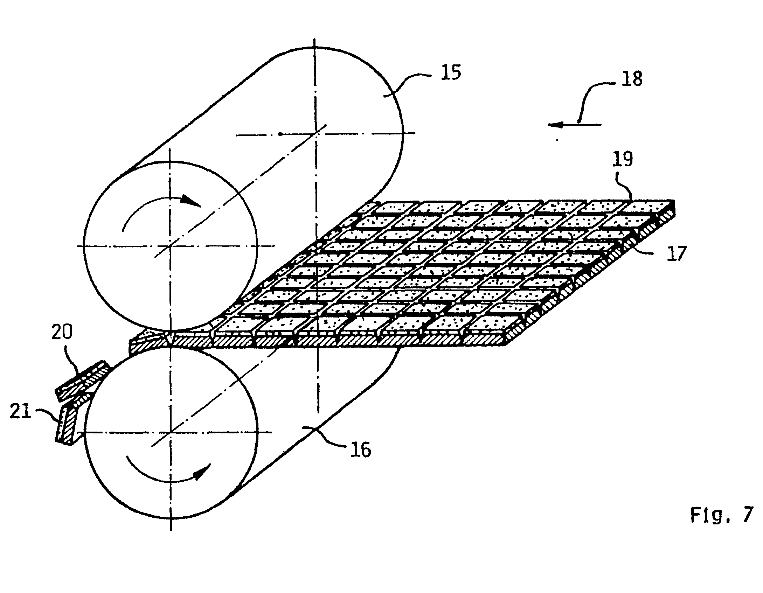

In Figur 7 ist ein entsprechendes Ausführungsbeispiel wiedergegeben, bei dem Kolben und Support durch eine obere Walze 15 und eine untere Walze 16 ersetzt sind, mit denen gleichzeitig ebenfalls unter Druck eine thermische Einwirkung erzeugt werden kann. Ein Substrat 17, welches eine Vielzahl von einzelnen Detektorelementen enthält, durchläuft die Rollen 15 und 16 in Richtung des Pfeiles 18. Dabei ist entweder – wie in der Zeichnung dargestellt – das Substrat (wiederum nach Art einer Schokoladentafel) bereits mit Sollbruchstellen vorgebenden Rillen 19 versehen, so daß nach dem Pressvorgang – gegebenenfalls unter Einwirkung nicht dargestellter Umlenkmittel – ein Abbrechen und Zerteilen in einzelne Detektorelemente 20 und 21 erfolgt.

Dieses Zertrennen erfolgt bei einer anderen bevorzugten Ausführung der Erfindung dadurch, daß die obere Walze 15 mit einem entsprechenden Kantenmuster versehen ist, welches gleichzeitig mit der Einwirkung von Druck und Temperatur eine Zerteilung des Substrats in einzelne Chips bewirkt, wobei in der unteren Walze 16 dem Muster der Anordnung der Kanten auf der Walze 15 entsprechende Aussparungen vorgesehen sind.

Die zuvor dargestellten verschiedenen Ausführungsformen des erfindungsgemäßen Verfahrens geben verschiedene Möglichkeiten zur Erzeugung von Dünnschicht-Detektoren an, welche entsprechend den gegebenen Randbedingungen Anwendung finden können.

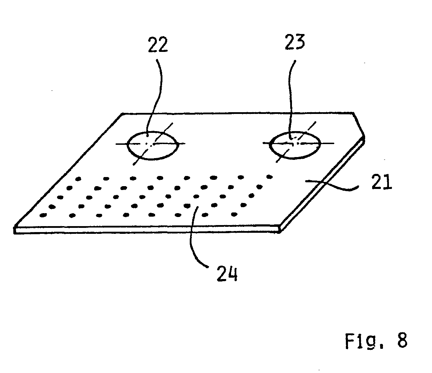

Ein nach dem erfindungsgemäßen Verfahren hergestellter Dünnschicht-Detektor wird bevorzugt in der Weise ausgebildet, daß die Detektorfläche die Schichtträgeroberfläche teilweise bedeckt, so daß die restliche Oberfläche zur Erzeugung einer Identifizierungsstruktur zur Verfügung steht, wobei Löcher oder Vertiefungen eine binäre Verschlüsselung zum Erkennen einzelner Detektoren bilden, welche maschinell lesbar ist. Eine derartige Ausführung ist in Figur 8 wiedergegeben, wobei ein Schichtträger 21 zwei Ausnehmungen 22 und 23 zur Aufnahme von Detektorchips aufweist. Der Bereich 24 enthält eine Struktur von Vertiefungen, welche Codierungen bilden, deren Informationsinhalt beispielsweise nach Art eines Lochstreifens oder einer Lochkarte angeordnet ist. Die im Bereich 24 angeordneten Vertiefungen oder Bohrungen können mittels Durchstrahlung oder Reflektion erfaßt und ausgewertet werden. Damit ist eine Zuordnung bzw. Individualisierung einzelner Dosimeter mit einfachen Mitteln möglich.

**Patentansprüche**

1. Verfahren zur Herstellung eines Dünnschicht-Detektors für ein integrierendes Festkörperdosimeter, insbesondere Thermolumineszenzdosimeter (TLD), aus pulverförmigem Material gekennzeichnet durch das Einwirken eines hohen Drucks bei gleichzeitig hoher Temperatur auf eine Schicht des pulverförmigen Materials, in der Weise, daß bei dem so gewählten Arbeitspunkt durch plastisches Fließen der Pulverkörner ein chemisch-mechanisches Verschweißen der Schicht mit einem präparierten Schichtträger (1) eintritt.

2. Verfahren nach Anspruch 1, dadurch gekennzeichnet, daß der Arbeitspunkt in einem derartigen Bereich gelegen ist, daß das Thermolumineszens-Ansprechvermögen bei Verwendung des Detektors ein relatives Maximum aufweist.

3. Verfahren nach einem der vorangehenden Ansprüche, gekennzeichnet durch die Verwendung eines plastisch leicht verformbaren Detektormaterials (2), insbesondere LiF, $Li_2B_4O_7$ bzw. $CaF_2$.

4. Verfahren nach einem der vorangehenden Ansprüche, gekennzeichnet durch die Verwendung eines Schichtträgermaterials mit niedriger effektiver Ordnungszahl Z im Periodensystem der Elemente, insbesondere aus den Elementen Be, B, Mg, Al bzw. Si oder den Verbindungen BeO, MgO bzw. $Al_2O_3$, welches vorzugsweise zuvor einer Oberflächenbehandlung durch Sandstrahlen und/oder Ätzen unterworfen wurde.

5. Verfahren nach einem der vorangehenden Ansprüche, gekennzeichnet durch das Aufbringen einer flammgespritzten Schicht, bestehend insbesondere aus B, Mg, Al bzw. Si, welche als Bindeschicht (3) für die Detektorschicht die Schichtträgeroberfläche bildet.

6. Verfahren nach den Ansprüchen 1, 3 und 5, gekennzeichnet durch die Verwendung eines aus Graphit bestehenden Schichtträgers.

7. Verfahren nach einem der vorangehenden Ansprüche, gekennzeichnet durch das Aufbringen einer optischen Reflexionsschicht (4), bestehend insbesondere aus den Metallen Be, Al bzw. Mg oder den Verbindungen MgO bzw. $Al_2O_3$, unterhalb der Detektorschicht.

8. Verfahren nach Anspruch 7, gekennzeichnet durch das Aufbringen der Reflexionsschicht mittels Flammspritzen.

9. Verfahren nach einem der vorangehenden Ansprüche, gekennzeichnet durch die Verwendung einer großen Schichtträgerplatte (10, 17) für das gleichzeitige Heißpressen einer Vielzahl von Detektoren, mit nachfolgendem Abschneiden oder Absägen der einzelnen Detektoren.

10. Verfahren nach Anspruch 9, dadurch gekennzeichnet, daß bei Verwendung einer großen Schichtträgerplatte (17) mit einem Kerbmuster eine Anzahl von Detektoren während einer sehr kurzzeitigen Drucküberlastung gleichzeitig herausgebrochen werden.

11. Verfahren nach Anspruch 9, gekennzeichnet durch die Verwendung von Preßwerkzeugen (12) mit einem Schneidenmuster (11) zum Herausbrechen einer Anzahl von Detektoren.

12. Verfahren nach einem der vorangehenden Ansprüche, dadurch gekennzeichnet, daß die Detektorschicht mittels eines entsprechend erhabenen Preßwerkzeugs (5) in eine Vertiefung (7) der Oberfläche der Schichtträgerplatte hinein heißgepreßt wird.

13. Verfahren nach einem der vorangehenden Ansprüche, dadurch gekennzeichnet, daß das Heißpressen als Walzvorgang (15, 16) erfolgt.

14. Dünnschicht-Detektor hergestellt nach dem Verfahren entsprechend einem der vorhergehenden Ansprüche, dadurch gekennzeichnet, daß die Detektorschicht die Schichtträgeroberfläche nur teilweise bedeckt.

15. Dünnschicht-Detektor hergestellt nach dem Verfahren entsprechend einem der Ansprüche 1 bis 13, gekennzeichnet durch eine einen Identifizierungscode bildende Struktur (24), welche insbesondere in Form einer Anzahl von Vertiefungen und/oder Löchern ausgebildet ist und sich auf oder in nicht mit Detektormaterial bedeckten Teilen des Schichtträgers (21) befindet.

**Claims**

1. A method of manufacturing a thin layer detector for solid state thermoluminescence dosimeters comprising the steps of: providing a substrate with suitably prepared surface; depositing a layer of a powder of a suitable thermoluminescent material on said prepared surface of the substrate; and simultaneously applying high pressure and elevated temperature to the powder layer at a working point sufficient to cause plastic flow of the powder grains and physicochemical bonding of the powder material with said surface of the substrate, whereby a thin hot-pressed layer of the thermoluminescent material is formed on and bonded to said surface of said substrate (1).

2. The method defined in claim 1, wherein said working point of temperature and pressure values is selected in an area, where the thermoluminescence response, when using the detector, is a relative maxima.

3. The method according to one of the preceding claims, wherein said thermoluminescent detector material (2) is a material with easy plastic flow, in particular LiF, $Li_2B_4O_7$ or $CaF_2$.

4. The method defined in one of the preceding claims, wherein the substrate is formed of a material of low effective atomic number Z in the Periodic System, in particular of the elements Be, B, Mg, Al or Si, or of the compounds BeO, MgO, $Al_2O_3$, preferably preparing the surface of said substrate by sandblasting or etching.

5. The method according to one of the preceding claims wherein the surface of said substrate is prepared by flame-spraying a bonding layer (3) onto said surface of said substrate, wherein said bonding layer particularly comprises B, Mg, Al or Si.

6. The method according to claims 3 and 5, wherein said substrate comprises graphite.

7. The method according to one of the preceding claims, wherein said surface of said substrate is prepared by the application of a light-reflection layer (4), which is particularly formed of the metals Be, Al or Mg or of the compounds MgO and/or $Al_2O_3$.

8. The method defined in claim 7, wherein the reflection layer is applied by flame-spraying.

9. The method according to one of the preceding claims, wherein: said substrate is a large plate (10, 17) suitable for the formation of a plurality of thin layer detectors; said step of depositing includes depositing said layer of powder material over an area of said surface sufficient to form a plurality of said thin layer detectors; said step of simultaneously applying is carried out simultaneously for the plurality of detectors; and further comprising subsequently dividing said substrate with the hot-pressed detector layer into said plurality of individual thin layer detectors by cutting or sawing.

10. The method defined in claim 9, wherein: said large substrate (17) is provided with a groove pattern corresponding to the shape of the individual detectors; and said step of deviding includes simultaneously dividing said substrate into said plurality of individual detectors by the application of a very short pressure overload.

11. The method defined in claim 9, wherein: pressure is applied by means of a pressure tool (12) which has an edge pattern (11) corresponding to the outline of the individual detectors; and said step of dividing is carried out simultaneously for all said detectors by said edge pattern.

12. The method according to one of the preceding claims, wherein: said surface of said substrate is provided with a recess; and said step of applying high pressure and elevated temperature includes applying said temperature and pressure to the layer of powder material in the recess with a suitably shaped pressing tool (5).

13. The method defined in claim 1, wherein said step of simultaneously applying high pressure and elevated temperature is carried out by rolling (15) (16).

14. The method defined in claim 1, wherein said layer of thermoluminescent material powder is deposited so as to only partially cover said surface of said substrate.

15. The method defined in claims 1 to 13, further comprising forming a code structure (24) for identification of the individual detectors in the non-covered portion of the substrate surface (21).

**Revendications**

1. Procédé de fabrication d'un détecteur en fine couche pour des dosimètres de l'état solide, en particulier par thermoluminescence, caractérisé en ce qu'il comporte les étapes consistant à: disposer d'un substrat avec une surface convenablement préparée; déposer une couche de poudre d'un matériau thermoluminescent convenable sur ladite surface préparée du substrat; et simultanément, appliquer, en un point d'intervention, une pression et une température suffisamment élevées pour provoquer le fluage plastique des grains de poudre et la liaison physicochimique du matériau en poudre avec ladite surface du substrat, ce par quoi une fine couche, pressée à chaud, du matériau thermoluminescent se forme sur ladite surface dudit substrat (1) et s'y lie.

2. Procédé selon la revendication 1, caractérisé en ce que l'on y choisit le point d'intervention des valeurs de la température et de la pression dans une zone dans laquelle la réponse de la thermoluminescence, lorsque l'on utilise le détecteur, constitue un maximum relatif.

3. Procédé selon l'une des revendications précédentes, caractérisé en ce que ledit matériau détecteur thermoluminescent (2) est un matériau présentant facilement un fluage plastique, en particulier LiF, $Li_2B_4O_7$ ou $CaF_2$.

4. Procédé selon l'une des revendications précédentes, caractérisé en ce que le substrat est formé d'un matériau de faible numéro atomique effectif 2 du système périodique, en particulier des éléments Be, B, Mg, Al ou Si, ou de leurs composés BeO, MgO, $Al_2O_3$, en préparant de préférence la surface dudit substrat par sablage ou attaque chimique.

5. Procédé selon l'une des revendications précédentes, caractérisé en ce que l'on prépare la surface dudit substrat en déposant, par vaporisation à la flamme, une couche de liaison (3) sur ladite surface dudit substrat, étant précisé que ladite couche de liaison est en particulier constituée de B, Mg, Al ou Si.

6. Procédé selon les revendications 3 et 5, caractérisé en ce que ledit substrat est constitué de graphite.

7. Procédé selon l'une des revendications précédentes, caractérisé en ce que l'on prépare ladite surface dudit substrat par application d'une couche (4) réfléchissant la lumière, formée en particulier des métaux Be, Al ou Mg ou des composés MgO et/ou Al$_2$O$_3$.

8. Procédé selon la revendication 7, caractérisé en ce que l'on applique la couche réfléchissante par vaporisation à la flamme.

9. Procédé selon l'une des revendications précédentes, caractérisé en ce que: ledit substrat est une plaquette de grande dimension (10, 17) convenant pour la formation d'une pluralité de détecteurs en couche fine; ladite étape de dépôt comporte le dépôt de ladite couche de matériau en poudre sur une zone de ladite surface suffisante pour former une pluralité desdits détecteurs en fine couche; ladite étape d'application simultanée s'effectue simultanément pour la pluralité des détecteurs; et en ce qu'il comporte en outre le fait de diviser ensuite ledit substrat, avec la couche de matériau détecteur pressée à chaud, en ladite pluralité de détecteurs individuels en fine couche en le coupant ou le sciant.

10. Procédé selon la revendication 9, caractérisé en ce que: ledit substrat (17) de grande dimension présente un réseau de rainures correspondant à la forme des différents détecteurs; et en ce que ladite étape de division comprend le fait de diviser simultanément ledit substrat en ladite pluralité des détecteurs individuels par application d'une très brève surpression.

11. Procédé selon la revendication 9, caractérisé en ce que: on applique la pression au moyen d'un outil de pression (12) qui présente un réseau de nervures (11) correspondant au tracé des différents détecteurs; et en ce que ladite étape de division est simultanément effectuée pour tous lesdits détecteurs par ledit réseau de nervures.

12. Procédé selon l'une des revendications précédentes, caractérisé en ce que: ladite surface dudit substrat présente un évidement; et en ce que ladite étape d'application d'une pression et d'une température élevées inclut le fait d'appliquer ladite température et ladite pression à la couche du matériau en poudre qui se trouve dans l'évidement avec un outil de pressage (5) de forme convenable.

13. Procédé selon la revendication 1, caractérisé en ce que ladite étape consistant à appliquer simultanément une pression et une température élevées s'effectue par laminage (15) (16).

14. Procédé selon la revendication 1, caractérisé en ce que l'on dépose ladite couche de poudre de matériau thermoluminescent de façon à ne revêtir que partiellement ladite surface dudit substrat.

15. Procédé selon les revendications 1 à 13, caractérisé en ce qu'il comporte en outre le fait de former, dans la portion non revêtue de la surface du substrat (21) une structure de code (24) pour identification des différents détecteurs.

Fig. 1a

Fig. 1b

Fig. 1c

Fig. 2a

Fig. 2b

Fig. 2c

$I_{Ph}$

$T \longrightarrow$

Fig. 3

Fig. 4 a

Fig. 4 b

Fig. 4 c

Fig. 4 d

Fig. 4 e

100 µm

Fig. 4 f

Fig. 5

Fig. 6

Fig. 7

EP 0 099 852 B1

Fig. 8